(19)

Europäisches
Patentamt
European
Patent Office
Office européen
des brevets

(11) **EP 2 116 919 A1**

(12) **EUROPEAN PATENT APPLICATION**

(43) Date of publication:
**11.11.2009 Bulletin 2009/46**

(51) Int Cl.:
**G06F 3/01** *(2006.01)* **G06T 15/00** *(2006.01)*
**G09G 5/10** *(2006.01)*

(21) Application number: **08275014.2**

(22) Date of filing: **09.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **MBDA UK LIMITED**
**Stevenage,**
**Hertfordshire SG1 2DA (GB)**

(72) Inventor: **The designation of the inventor has not yet been filed**

(74) Representative: **Lewis, Debra Louise**
**BAE Systems plc**
**Group IPDepartment**
**Lancaster House**
**P.O. Box 87**
**Farnborough Aerospace Center**
**Farnborough, Hampshire GU14 6YU (GB)**

(54) **display of 3-dimensional objects**

(57)     A system for displaying 3-dimensional images is provided. The system comprises a monitor, a rendering module adapted to provide image data for display by the monitor, and a point-of-view module for determining the position of a viewer relative to the monitor, wherein the output of said rendering module is dependent on the determined position of the viewer relative to the monitor. The invention also provides a method of displaying an image of an object, the method comprising the steps of: determining a position of a viewer in a common co-ordinate system; determining the position of the object in the common co-ordinate system; and using a rendering module to provide data for displaying the object so that, when displayed, the object appears to the viewer as it would when viewed from the determined position of the viewer. The invention also provides a polar correction module adapted to adjust the brightness of pixels of the image to be displayed in dependence on the position of the viewer.

Fig. 5

**Description**

The present invention is directed to a system for the display of images that appear to be 3-dimensional (3D). In particular forms of the invention, a standard monitor is used that creates the illusion for a viewer that an object displayed is 3-dimensional.

Many existing software applications are able to present a user with rendered images of a solid object. The applications provide images of objects that are drawn as if viewed from some specific point of view (POV). In many cases, the user has the capability of moving the POV using a mouse, keyboard arrows, or even by entering numeric values.

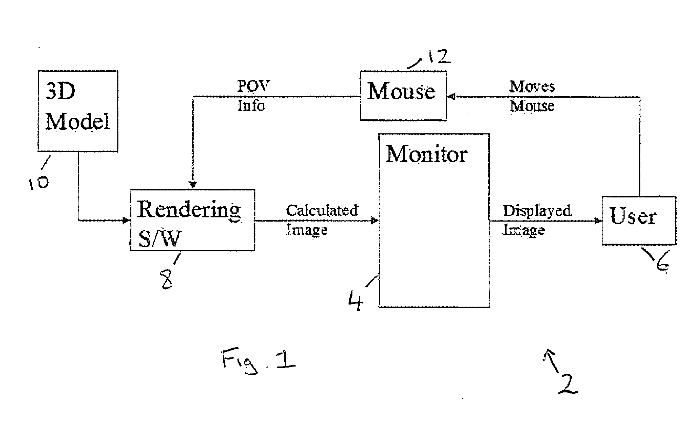

Figure 1 is a block diagram of a known 3D display system, indicated generally by the reference numeral 2. The 3D display system 2 comprises a monitor 4, a user 6, rendering software 8, a 3D model 10 and a mouse 12. The monitor 4 is used to display images to be viewed by the user 6. The images are generated by the rendering software 8, which reads model data obtained from the 3D model 10 and constructs an internal representation of an object. The user inputs point-of-view (POV) data via the mouse 12 and the rendering software 8 calculates how the object would look when viewed from this POV and creates a digital image accordingly. This image is then displayed on the monitor 4. In variants of the system 2, the user 6 might provide POV data using numeric inputs, keyboard arrows or in some other way.

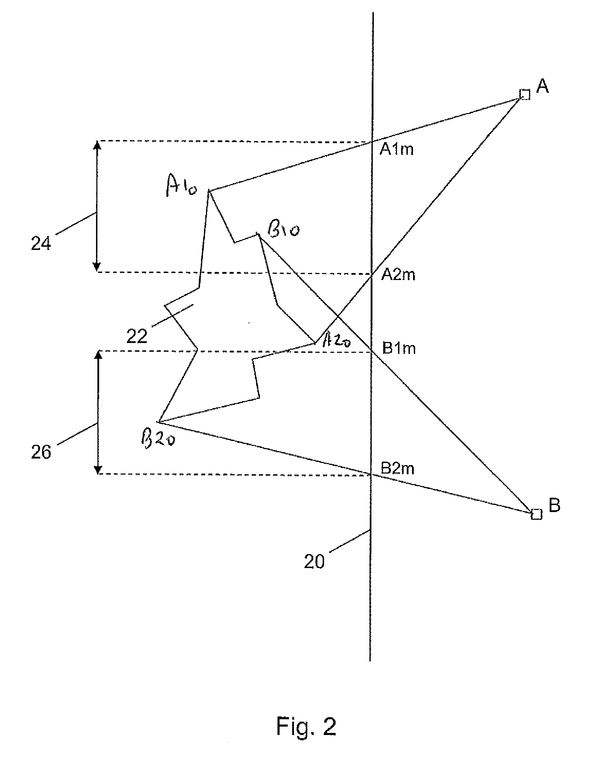

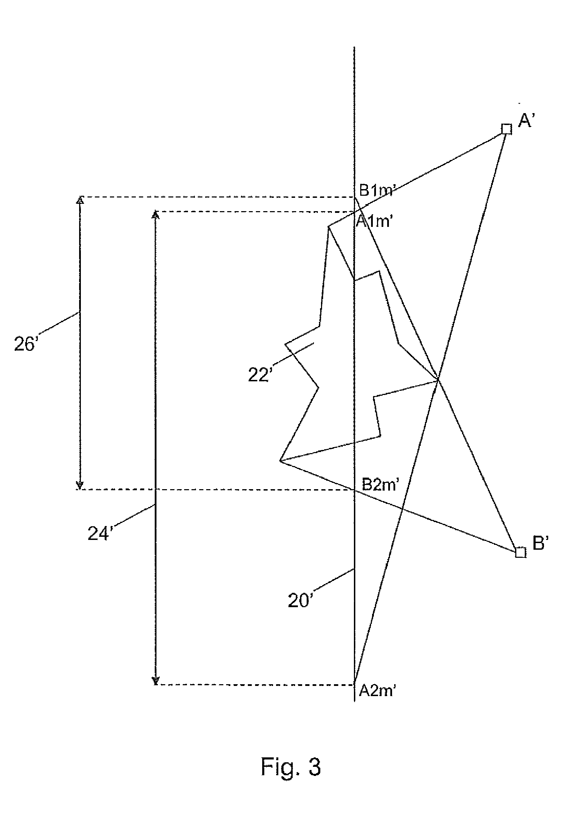

The mechanism by which objects can be displayed on a standard monitor to create the illusion of 3-dimensions is described below with reference to Figures 2 and 3.

Figure 2 shows a monitor screen 20 and a virtual object 22 notionally positioned behind the screen. Figure 2 shows the use of the monitor screen 20 to make it appear to a user that the virtual object 22 is located in the position shown in Figure 2.

Figure 2 demonstrates how the virtual object 22 might be viewed from two different points-of-view (labelled A and B in Figure 2). With the viewer in position A, the pixels on the monitor screen from A1m to A2m would be used to render the image of the object 22. These pixels fall in the range shown by arrow 24.

A ray originating from point A1o on the virtual object 22 would follow the same path (and thus be indistinguishable by the eye) as one from A1m on the monitor screen 20. Similarly, a ray from A2o on the virtual object 22 would look identical to one from A2m on the monitor screen 20. Therefore, from viewing position A, if the values of the pixels between A1m and A2m are correctly calculated, the image seen on the screen would look exactly like the object would look from that same POV.

Of course, if that same image were viewed from position B, then there would be no 3D illusion, as the actual object would look very different from that point-of-view.

With the viewer in position B, the pixels on the monitor screen from B1m to B2m would be used to render the image of the object 22. These pixels fall in the range shown by arrow 26. A ray originating from point B1o on the virtual object 22 would follow the same path (and thus be indistinguishable by the eye) as one from B1m on the monitor screen 20. Similarly, a ray from B2o would look identical to one from B2m. Therefore, from viewing position B, if the values of the pixels between B1m and B2m are correctly calculated, the image seen on the screen would look exactly like the object would look from that same POV.

Figure 3 shows a monitor screen 20' and a virtual object 22' notionally at the screen, with some of the object 22' behind the screen and some in front of the screen. In this way, the virtual object 22' appears to emerge from the screen.

Figure 3 demonstrates how the virtual object 22' might be viewed from two different points-of-view, labelled A' and B'. With the viewer in position A', the pixels on the monitor screen from A1m' to A2m' would be used to render the image of the object 22'. These fall in the range shown by arrow 24'. Similarly, with the viewer in position B', the pixels on the monitor screen from B1m' to B2m' would be used to render the image of the object 22'. These fall in the range shown by arrow 26'.

A problem with prior art systems, such as that described above with reference to Figure 1, is that the nominal point-of-view (POV) of the viewer, from which the image of the rendered object is drawn, is fixed and does not move with the actual motion of the viewer. Thus, the instant the viewer moves, the 3D illusion is lost. Whilst it would be conceivable for mouse inputs to be used to move the nominal POV in strict accordance with the viewer's actual motion, doing so manually is simply not feasible with an appropriate level of fidelity.

A second problem with prior art systems is that by requiring the user to input positional data using a mouse requires a significant level of skill on the part of the user. The prior art systems also limit the ability of the user to carry out other functions using the hand that is operating the mouse or other position indicator.

The present invention seeks to address at least some of the problems outlined above.

The present invention provides a system comprising: a monitor; a rendering module adapted to provide image data for display by the monitor; and a point-of-view module for determining the position of a viewer relative to the monitor, wherein the output of said rendering module is dependent on the determined position of the viewer relative to the monitor. In this way, an object displayed on the monitor can be made to appear to be 3-dimensional to the viewer.

The present invention also provides a point-of-view module for providing data for use in rendering an object for display, the point-of-view module having an input for receiving images relating to a user and an output for providing point-of-view data. In some forms of the invention, the point-of-view module might determine the position of a viewer in ways other than using images of the viewer.

The present invention further provides a method of displaying an image of an object, the method comprising the steps of: determining the position of a viewer in a common co-ordinate system; determining the position of the object in the common co-ordinate system; and using a rendering module to provide data for displaying the object so that, when displayed, the object appears to the viewer as it would when viewed from the determined position of the viewer.

The present invention enables a standard monitor screen to be made to generate images which appear to be truly 3 dimensional. An image of a solid object is shown as if the object physically occupied an actual, fixed position in space, and the image changes with the viewer's point of view, exactly in accordance with how the real view of such an object would change. This gives a strong impression of three-dimensionality, and also allows the user to view the object from multiple viewpoints without the need to use his or her hands to manipulate view controls.

Any system which renders projected images from a particular viewpoint can be said to simulate 3D. However, in many prior art systems, the image remains static as the viewer moved his head, thus destroying the 3D effect. The present invention provides an arrangement in which, as the head of a user moves (and hence the viewer's point of view moves), this new position is calculated in real time and the presented image is redrawn to match the image of the object as it would be seen from that new position. Thus, the present invention changes the image so that it continues to represent a consistent apparent 3D view of the object. This is not achievable by using a mouse, or other such device which is independent of the head movement, to move the POV.

Many software applications present the user with rendered images of a solid object. These are drawn as if viewed from some specific point of view (POV). In most cases, the user has the capability of moving the POV using the mouse, keyboard arrows, or even by entering numeric values. In the methodology of the present invention, the image rendering software can remain essentially unchanged, whilst receiving the POV input from a new system. A camera, mounted on the monitor and aimed at the viewer, can generate images to be used by the new system to calculate the viewer's actual POV. This calculated POV would be input to the image rendering software. Thus the image drawn on the screen would exactly mimic the view that the user would obtain if the object physically existed in the modelled position.

Virtual reality (VR) systems do something similar but differ in two important respects. Firstly, the head motion sensing is not done via a cheap camera (as is possible in the present invention), but by means of accelerometers and gyros. Many people have or can obtain web cams: most do not have gyros and accelerometers. Secondly, in a VR system, typically the screen is an integral part of the VR helmet and moves with the head. In this system a standard monitor is used, and remains fixed.

A computer game system that has some similarities with the present invention is that sold under the name Wii (RTM) by the company Nintendo (RTM). In the Wii (RTM) system, a user interacts with the action of a computer game by means of a hand-held device which, by means of internal sensors, determines its own movement and relays this information to the game system, which in turn uses that information to control the action of some game component - e.g. a golf club. Whilst there is some degree of user-interaction in this system, it does not attempt to emulate the change in view the user would have as a result of the motion of his actual viewpoint.

EP 1 279 425 also describes features that have some similarities with those of the present invention. EP 1 279 425 describes a system which relates specifically to a home PC game system which uses a camera to view the user and determine his gross angular motion so as to use this to reflect a similarly gross change in the viewpoint of the displayed game image. The system described lacks a more general application to any system where a 3D view of an object is required. Indeed, although the system of EP 1 279 425 purports to modify the displayed view based on the viewer's movement, this is primarily for the purpose of relating to his actions in a game context; there is no serious attempt to generate and maintain any form of true 3D illusion.

As noted above, the system of EP 1 279 425 bases its assessment of viewer position on gross body measurements. There is no teaching of the determination of the actual position of the viewer's eye - either by direct measurement of the iris position, or by reference to a key target object. Also, the system of EP 1 279 425 bases its assessment of viewer position purely by means of the apparent angular displacement of the viewer's image without including any distance information. Unless the camera used is placed exactly in the middle of the display monitor (clearly not a feasible proposition, and not one which is suggested in EP 1 279 425) this is inadequate information on which to base a convincing 3D illusion.

In some forms of the invention, an imaging device (such as a webcam) is provided for taking images of the viewer, wherein the point-of-view module determines the position of the viewer from the images of said viewer taken by said imaging device. The use of a webcam or similar imaging device enables the system to be provided in a simple and cheap manner; indeed, most users need only be provided with the algorithm required to implement the invention in order to set up a workable system.

In some forms of the invention, a plurality of imaging devices (such as webcams) are provided for taking images of the viewer, wherein the point-of-view module determines the position of the viewer from the images of said viewer taken by said plurality of imaging devices. The use of multiple imaging devices enables the field of view to be increased whilst enabling each individual imaging device to have a much smaller field of view. Alternatively, or in addition, one or more of the imaging devices may be movable. Providing one or more cameras that can be steered to track the movement of a viewer enables the field of view to be increased whilst enabling each individual imaging device to have a much smaller field of view. Providing multiple and/or moveable imaging devices can be used to reduce errors or discrepancies in the measured position of the viewer.

In many forms of the invention, the point-of-view module determines the position of an object associated with said viewer, thereby determining the position of said viewer. The object may be a disc, such as a coloured disc, which may be worn by the viewer (for example on a headband, or on an adapted pair of glasses). In one exemplary embodiment, a green disc is used. Filters may be provided to filter out other colours in order to assist is locating the position of the coloured disc. A thresholding step could then be used. In some forms of the invention, the object is part of the user; for example, the user's eyes, irises, pupils or face could be used. In the event that the user's eyes are not used, some form of compensation for the distance between the object that is used and the viewer's eyes may be provided.

A common co-ordinate system may be determined. The positioning of the viewer in that common co-ordinate system may include the step of translating the position of the viewer relative to the imaging device into the position in the common co-ordinate system.

The algorithm for determining the position of the object may include the determination of a best-fit ellipse for the object. The best-fit ellipse may be used to determine elevation and azimuth angles of the object.

The point-of-view module may determine the position of a plurality of objects associated with said viewer. For example, the viewer may wear a plurality of coloured dots; alternatively, the detection of the position of two eyes could be determined. Determining the position of more than one object enables the detection of movements such as the tilting of the viewer's head, which have an impact on the 3D view that should be presented, but are not detectable if a single object is detected.

A problem with some arrangements of the invention is that it can take a significant amount of time to process incoming data concerning the position of objects being detected. In some forms of the invention, this is addressed by adapting the point-of-view module so that it uses recent data to define a narrow area to search for the object(s). This use of spot tracking can significantly speed up the process of object detection.

A further problem encountered with the use of some systems in accordance with the present invention is that when a typical monitor is viewed from different angles, the brightness of pixels varies; this is because the brightness of pixel output varies with the angle at which it is viewed. In some forms of the invention, this problem is addressed by using data concerning the point-of-view of the viewer to compensate for this variation. For example, if a pixel is being viewed at an angle at which its brightness would normally be low, the brightness of that pixel can be increased to compensate. A polar correction module may be provided to provide this feature.

The rendering software may be existing rendering software. In the event that the rendering module has a POV input, the POV data can be provided directed (possibly following suitable scaling and other translations) to the rendering module. In some cases, the rendering module has an input for mouse-based instructions regarding POV; in such cases, that input can be used for this purpose (this may be referred to as "mouse emulation"). A keyboard input might be available instead and can be used in a similar way. Alternatively, the rendering software may be written explicitly to be used with the system of the present invention, thereby enabling a straightforward point-of-view input interface to be provided.

The present invention may allow for dominant eye selection and compensation to be provided.

The present invention may allow for stereoscopic imaging. For example, colour tinged images could be used and viewed through suitable tinged glasses. The glasses could simultaneously be used for providing data regarding the position of the viewer. For example, the glasses could be provided with coloured dots, or use a transmitter based system or use a dead reckoning system as described elsewhere in this document.

A calibration mechanism may also be providing, including a mechanical arrangement of known dimensions. In use, the calibration mechanism may be used to position an object in a known position relative to the monitor. The position of the object can then be determined using the principles of the present invention and the system calibrated to adjust for any variance between the determined position and the known position. The calibration step may be repeated one or more times with the calibration mechanism located in different positions each time.

As described above, the present invention can be used to display an image that provides a powerful 3D illusion. As part of this process, the point-of-view module of the invention may generate a determined position of the viewer that reflects the actual measured position of the viewer. In alternative forms of the invention, however, the point-of-view module may generate a determined position of the viewer that is related to, but not equal to, a change in the position of the viewer from a reference position. For example, the determined position may be a fixed multiple (which could be greater or less than 1) of the change for the reference position. This enables a gain condition to be provided such that, for example, a small movement of the viewer's head can be translated into a larger movement of the point-of-view of an object being displayed. Such an arrangement would not provide a 3D illusion, but would be useful in many scenarios, for example where an operator's workload is so high that the addition of an extra, instinctively implementable input device (i.e. the operator's head) would be welcomed, or in cases where all other potential input devices are occupied with other tasks.

The present invention also comprises a system comprising: a monitor for displaying an image; a point-of-view module for determining the position of the viewer relative to the monitor; and a polar correction module adapted to adjust the brightness of pixels of said image in dependence on the position of the viewer, thereby providing polar brightness correction. The point-of-view module may have any of the features described in this document.

The present invention yet further provides a method of displaying an image of an object on a monitor, the method comprising the steps of: determining a position of a viewer relative to the monitor; and adjusting the brightness of pixels of said image in dependence on the position of the viewer, thereby providing polar brightness correction. The method of determining the position of the viewer may comprise any of the features described in this document.

When a typical monitor is viewed from different angles, the brightness of pixels varies; this is because the brightness of pixel output varies with the angle at which it is viewed. This problem can be addressed by using data concerning the point-of-view of the viewer to compensate for this variation. For example, if a pixel is being viewed at an angle at which its brightness would normally be low, the brightness of that pixel can be increased to compensate

Embodiments of the invention will now be described with reference to the accompanying schematic drawings of which:

Figure 1 is a block diagram of a known 3D display system;
Figure 2 demonstrates the projection of a three-dimensional object onto a two-dimensional screen;
Figure 3 demonstrates the projection of a three-dimensional object onto a two-dimensional screen such that the object appears to project out of the screen;
Figure 4 shows a system in accordance with an aspect of the present invention;
Figure 5 is a block diagram demonstrating features of the present invention;
Figure 6 is a block diagram incorporating a modification to the system of Figure 5;
Figure 7 shows an arrangement for the calibration of systems in accordance with an aspect of the present invention; and
Figure 8 demonstrates the principle of polar intensity.

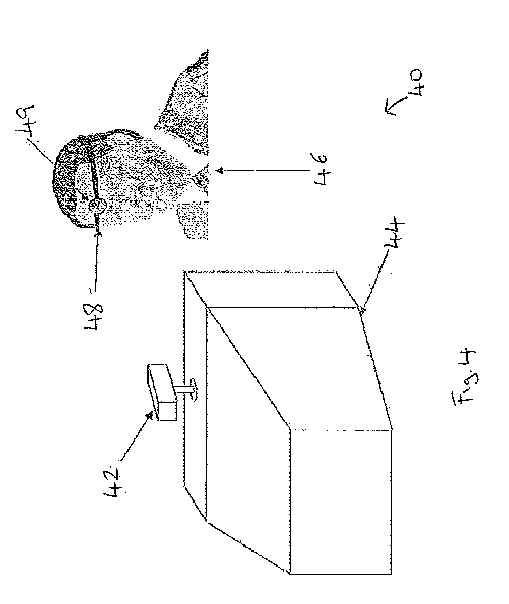

Figure 4 shows a system, indicated generally by the reference numeral 40, in accordance with an embodiment of the present invention. In the system 40, a camera 42 is mounted on (or near) a monitor 44 and a user 46 wears a headband 48 (or any suitable mounting apparatus) to which is attached a circular, coloured disc 49 (often referred to below as a "dot").

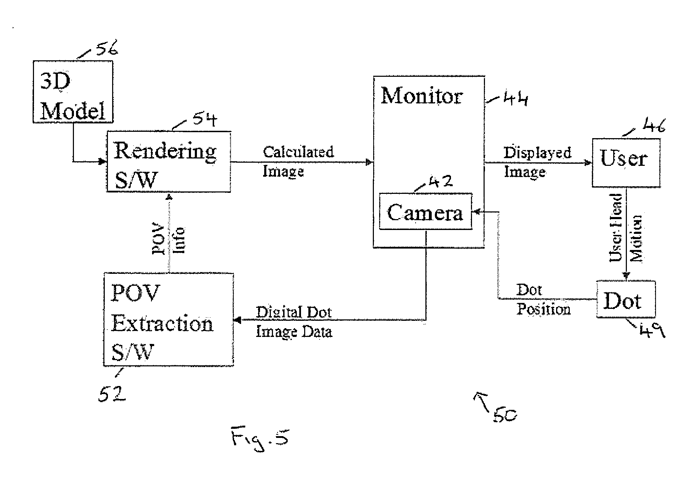

Figure 5 is a block diagram, indicated generally by the reference numeral 50, demonstrating the functionality of the system 40 shown in Figure 4. In addition to the camera 42, monitor 44, user 46, and dot 49 described above with reference to Figure 4, the system 50 also comprises point of view (POV) extraction software 52, rendering software 54 and 3D model 56. The rendering software 54 and 3D model 56 are similar to the rendering software 8 and 3D model 10 described above with reference to Figure 1.

In the use of the system of Figures 4 and 5, the user's dot 49 moves as the user's head (and therefore the user's POV) moves. The camera 42 determines the position of the dot 49 and provides that data to the POV extraction software module 52. The POV extraction module 52 provides positional data to the rendering software 54. The rendering software receives data from the 3D model 56 and the POV extraction software 52 and uses this to provide suitable data for display using the monitor 44.

Thus, in the system 50, the object image as displayed on the monitor 44 is rendered as if viewed from the user's position. The displayed image changes as the user moves thereby creating a powerful illusion that the object is a 3D object. Furthermore, the arrangement of the system 50 facilitates a more natural interaction with the displayed object. For example, when a person wants to look at a real 3-dimensional object from a different point of view, he simply moves his head to do so. The system 50 allows exactly the same interaction with the object displayed using the monitor 44 Furthermore, the system 50 also frees the user's hands as mouse input is no longer required. This could be a significant benefit in situations where the user has a heavy and/or complex workload.

In order to provide a realistic illusion that an object is 3-dimensional, it is necessary to put the drawn object, the monitor screen and the real observer in the same, physical, 3-dimentional space. To do this, the position of the object and the observer must both be known with respect to an axis system which includes the position of the monitor.

The positioning of the drawn object in the common space requires that the drawn object be defined in terms of the required space, so the object space needs to be defined in terms of the space occupied by the monitor, though not necessarily on a 1:1 scale of course. The object viewed could be a scaled model of a mountain if required. The object is then drawn on the screen as if viewed from the point of view (POV) of the observer. The crucial part is to ensure that the POV from which the object is drawn equates to the actual position of the viewer in the common frame of reference.

The positioning of the viewpoint thus demands that the observer's position with respect to that space is also known. This could be achieved by a variety of methods, including the use of a transceiver worn by the observer. However, the arrangement described below assumes that the observer's position is known relative to a camera (that is positioned at or near the monitor) by taking an image of a coloured dot or an observer's iris.

We begin by defining an axis system in which the projection takes place. For convenience, assume that the origin is in the centre of the monitor, +ve x-direction is to the right of the monitor (as viewed by the observer), +ve y-direction is vertically up, and +ve z-direction is out of the monitor (towards the observer). The question boils down to defining the point on the screen (Xs, Ys) at which a point on the object at Xo, Yo, Zo, should be positioned, to be correctly perceived by a viewer at point Xv, Yv, Zv.

The problem can be divided into 3 parts:

1. Determine the position of the observer with respect to the camera
2. Translate the viewer position with respect to the camera into a viewer position with respect to the common coordinate system
3. Determine the correct screen position of the pixel required to represent the point from the observer's point of view.

The first step is described in detail below.

We first need to know which part of the image represents the observer. Although other methods are available (including the use of a coloured disc as described above), the present algorithm assumes that the positions of the observer's iris is detected. It is assumed that appropriate image processing software is used to select the target, and an elliptical feature (the iris) is isolated. It should be noted that if the position of a coloured disc worn by the viewer is used, an appropriate offset must be made in the final position calculated. In fact, to minimise any ambiguity in the position of the eye with respect to the disc, it may be necessary to use 2 or even 3 discs, but the method is essentially the same.

The image taken by the camera 42 is provided to the POV extraction software 52 in real time. Where a coloured dot is used, each frame of the image is split into its component colours. If, for example, the dot 49 is green, then the red and blue values of each pixel would be subtracted from the green values to leave an image in which any purely green object would stand out.

A suitable threshold for the dot is selected, based on object numbers, and the resulting binary image objectised. The object best matching the dot parameters would then be extracted.

The best-fit ellipse for the dot object would be calculated, as would the dot x and y centroids.

The x and y positions in the image give the elevation and azimuth angles respectively of the dot. The range is obtained using a knowledge of the actual dot size and the size of the fitted ellipse major axis. Note, when a plane circle is viewed at any angle, it will appear to be an ellipse. The major axis of the ellipse will always subtend the same angle to a viewer as the diameter of the circle.

If the camera position and pointing angle with respect to the monitor screen are known, the range of the object from the camera, together with its azimuth and elevation angles (with respect to the camera position and the pointing direction) are sufficient to determine the exact dot position in the monitor-based axis set.

The algorithm is described in mathematical terms below. The algorithm makes a number of assumptions and requires a number of definitions as set out below. It should be noted that the assumptions are stated purely for the purposes of the subsequent derivation, and do not represent strict requirements for a working system. Whilst the above would usually be true (at least approximately), the application could still function with systems having different working parameters, but the required processing would be need to be modified appropriately.

Regarding the camera parameters:

- The camera is assumed to have a rectangular field of view (FOV).
- The centre of the image represents rays arriving parallel to its optical axis.
- The generated image is W pixels wide by H pixels high.
- This represents an angular width of Aw and an angular height of Ah.
- The pixels are arranged on an equally spaced rectangular grid.
- Each pixel has coordinates x and y, where, in both cases, these represent the number of the pixel from the image centre, resolved into the horizontal and vertical directions respectively.
- At the centre of the FOV, the pixels are "square", i.e. a pixel's vertical and horizontal subtense are equal.
- The camera does not suffer from significant "pincushion" or "barrel" distortion.
  Regarding the "target"
- The actual diameter of the target is known (whether this is the iris, a disc or something else)
- This diameter is designated as D.
- Finally, it is assumed that the value D is small compared to the distance of the target from the camera. This is not essential, but it simplifies the analysis as it allows the use of the approximation that the pixel angular subtense over the area of the dot does not change significantly.

Regarding the Input data:

- It is assumed that image processing software has scanned the camera-generated image and determined those pixels which represent the dot (or iris etc.).
- This data set is D(x,y) which consists of n pixels.
- Di is the ith pixel in the set and has xi and yi values where:

- xi = the x coordinate of the pixel in image coordinates,
- yi = the y coordinate of the pixel in image coordinates

Here is the process to obtain the iris position in the camera frame of reference:

1. Find the unweighted centroid of the pixels representing the iris. This gives the position of the centre of the image of the eye.
2. Define the centroid coordinates as iXv and iYv, where iX and iY are image pixel coordinates with respect to the image centre.
3. For the unweighted case, the centroid coordinates are given by:

$$iXv= Sum(xi \ for \ i = 1 \ to \ n)/n, \ i.e. \ the \ mean \ x \ value,$$

and

$$iYv= Sum(yi \ for \ i = 1 \ to \ n)/n, \ i.e. \ the \ mean \ y \ value$$

4. Find the ellipse giving the best "least-squares" fit to the target pixels.
5. Note the length, in pixels, of the major axis of the ellipse. Define this length as Lv.
6. The angle subtended, at the camera entrance pupil, between the camera optical

$$T = Atan[ \ 2*\{Sqrt((Xv\char94 2) + (Yv\char94 2))\}*tan(Aw/2)/W],$$

in radians axis and the centroid of the dot is defined as angle T, where:
7. At the point in the FOV given by T, the effective pixel subtense is defined as dT, where:

$$dT = W/[\{(y\char94 2)*tan(Aw)\} + \{(W\char94 2)/Tan(Aw)\}] \ ],$$

in radians
8. Define the total angle subtended, at the camera, by the dot diameter, as Ad where:

$$Ad = Lv*dT.$$

9. The distance from the camera entrance pupil to the dot is thus given by Sv, where:

$$Sv = D/[2*tan(Ad/2].$$

10. The distance from the camera to the position of the dot resolved in the direction of the camera optical axis ( the Z coordinate of he dot in camera axes) is given by cZv, where:

$$cZv = Sv \cos(T).$$

11. The azimuth angle of the dot wrt the camera axes is given by Daz, where:

$$\tan(Daz) = 2 * Xv * \tan(Aw/2)/W.$$

12. Similarly, the elevation angle of the dot wrt the camera axes is given by Del, where:

$$\tan(Del) = 2 * Yv * \tan(Ah/2)/H.$$

13. The X coordinate of the dot in camera axes is given cXv, where:

$$cXv = cZv * \tan(Daz).$$

14. The Y coordinate of the dot in camera axes is given cYv, where:

$$cYv = cZv * \tan(Del).$$

Thus the position of the iris in the camera axes has been derived. It is then relatively straightforward to convert the position of the iris on camera axes to a position of the iris in the common co-ordinate system using standard axis rotation and translation matrices.

Of course, the algorithm described above is one of many possible algorithms and is provided by way of example only.

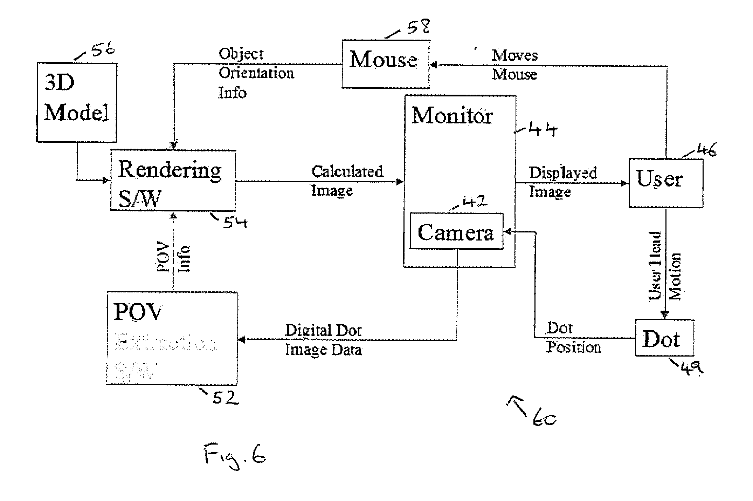

Figure 6 shows a system 60, that is a development of the system 50 described above with reference to Figure 5. The system 60 includes all of the features of the system 50, but additionally provides the user 46 with a mouse 58 to provide additional data to the rendering software 54. For example, the user 46 may be able to use the mouse to alter the object position and/or orientation (in additional to using the monitoring of the user's dot to alter the point-of-view).

Any software which generates 3D projections of objects must have, or assume, a specific POV from which the view is taken. Therefore the only connection required between this system and the renderer is via the POV input. How this input would take place depends entirely on the renderer software in question. In those cases where the rendering software is written explicitly to be used with this system (or where it provides an appropriate software interface to allow the dynamic insertion of a movable point-of-view), the interface with this system will be fairly straightforward. However, it may also be possible to interface with any rendering software which provides some means of injecting a POV, even if that is via, say the mouse, by "hijacking" the mouse signal. It may be possible to do this purely in software by intercepting the windows commands, or even by means of a physical connection into the mouse port - possibly even one which "breaks-in" between the mouse connector and the PC.

It would be possible to use a monitor/camera combination which was constructed as a whole, and factory calibrated to set the software values required to calibrate the camera position and view angle information.

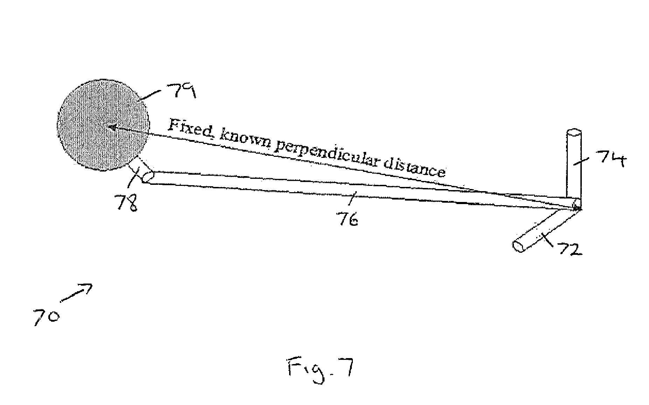

However, it would also be possible to enable any camera to be used with any monitor by performing a simple calibration process. This could, for example, be done using a tool such as that shown in Figure 7.

Figure 7 shows a calibration stick indicated generally by the reference numeral 70. The stick 70 comprises first 72, second 74 and third 76 portions arranged perpendicular to one another. At the end of the third portion 76 is an extension 78 having a ball 79 mounted to the end thereof. Since the dimensions of the various elements of the calibration stick 70 are known, if the junction of the first and second portions 72 and 74 is in a known position, and the third portion 76 extends in a known direction, then the position of the ball 79 can be precisely defined.

In the use of the calibration stick 70, the first and second portions 72 and 74 are placed in one corner of the monitor and the third portion 76 extends at right angles to the monitor. An image is taken of the ball 79 and, since its position relative to the screen is known, this image can be used to calibrate the image data.

Further calibration steps can be conducted by repeating the calibration process with the first and second portions 72 and 74 being placed in each of the four corners of the monitor.

In this way, the normal calibration process is effectively reversed, since here, the point-of-view is known, and the range of the object from the camera, together with its azimuth and elevation angles (with respect to the camera position and the pointing direction) are used to calculate the camera position and angle. These would then be stored for normal use.

The user eye position could also be set in a calibration mode. If the image from the camera was displayed, and the user given the opportunity to click on the image of the pupil of the preferred eye, the system could then calculate the displacement from the dot to the eye.

There are a number of potential applications for the present invention.

A first exemplary application is for demonstration purposes. It is well known to generate 3D data of sensed objects and to use the 3D models to demonstrate the capabilities of such systems by displaying to potential customers rendered images of the 3D objects thus sensed. The present invention enables a viewer of such models to move around the model in a simple and intuitive manner.

There are also a number of potential military applications of the invention. Before very long, mission planners, and even pilots and navigators, will have the capability to display real- or near real-time displays of 3D data. In all of these cases, the operational workload can be very high. This system provides an interface which is as natural to use and inherently understandable as possible and will thus reduce the required interaction time. It will also leave the user's hands free for other tasks, such as flying an aircraft or targeting weapons.

A further key area for applications of this invention is in gaming. Gamers frequently have a workload which is on a par with that of a fighter pilot. In some cases, gamers will simultaneously be using: a joystick, top-hat button, mouse and pedals. On top of that, give them the ability to look round obstacles and they will find a way to use it.

In order for the present invention to generate a believable 3D illusion, it must respond quickly to changes in the user's point-of-view. Ideally, the user should not experience any perceptible lag between moving his head and seeing the changed image on the screen. This process will partly be limited by the rendering software. However, many of the problems of fast rendering have already been solved, primarily by the games industry.

It is therefore important that the time taken by this process to analyse the image taken by the camera, identify the dot, calculate the dot position information and pass it to the rendering software should be as short as possible. This process could be facilitated if the whole of the camera image did not have to be searched on each frame for the dot. The speed at which this process is achieved can be increased by tracking the dot from frame to frame. Then only a small segment of the image would need to be searched for the dot as the physical limitations on the maximum possible user-head movement would mean that the dot's deviation from its predicted position on a frame to frame basis would be quite small.

In many of the embodiments described above, it was assumed that the user's eye remained at a fixed distance below and to the side of the spot. This would not be true if he tilted his head. It would be possible to determine the angle of the major axis of the best-fit dot ellipse, which, in turn, would enable the software to calculate the head tilt angle. However it would not be possible to determine which way the head was tilted (e.g. left/back, right/forward or left/forward, right/back). The addition of a second dot, coplanar with the first and at a fixed, known distance from it would enable this determination to be made. Similarly, a third dot, placed above or below the other two would enable the determination of vertical tilt.

Many of the embodiments described above use a coloured disc worn by the user to indicate the position of that user. This provides a simple mechanism that is convenient for the computer; however such an arrangement may not be convenient for the user and is not an essential feature of the invention. A range of alternatives exist for indicating the position of the user. For example, the user may be provided with a transmitter arrangement that is in communication with a receiver at the monitor; the user may wear glasses incorporating a gyro system, or some other dead reckoning system that provides a measurement of the user's position relative to a known starting position. Another option uses facial recognition software on the image of the user to indicate the position of features of the user's face, e.g. the irises.

The embodiments described above imply that the movement of the user's head is mapped directly onto a change in the viewer's point of view. This is not essential in all applications of the present invention. For example, one could set up a "gain", whereby a 10 degree movement of the user's head caused the viewpoint to change by a different amount, say 20 degrees. This would not necessarily support a 3D illusion, but it would facilitate the viewing of 3D models in a very instinctive way, particularly in environments where the user's workload was high and / or all other forms of input (e.g. mouse) were otherwise being utilised.

Most people have a "dominant" eye. The calibration mode of the system software ought to present the user with choice of which eye to pick as the actual source of the POV. It may even be useful to select a point midway between the eyes.

In all of the foregoing discussion, it has been assumed that a single POV is used, and a single object image is rendered. Whilst this would give a very powerful 3D illusion as a result of head movement, there would be no stereoscopic depth perception. However, generating a stereoscopic pair of images, with the images rendered as viewed from the POV of each eye respectively, would be a simple extension of this technique. If those images were then tinged with complementary colours and shown simultaneously and the user viewed the scene using glasses tinted with the corresponding colours (as per "standard" stereoscopic projection), the 3D illusion would be complete. Such glasses could also be used as part of the position indicating system, for example by providing the glasses with a gyro system indicating relative position, by providing the glasses with a transmitter and/or receiver of a position indicator system or by providing the glasses with one or more coloured discs.

This system will only work correctly if the user's head (or, at least, the dot) remains in the camera field of view. This implies a wide field of view for the camera. This in turn implies either a large imaging array, or relatively coarse pixelisation. When designing the ideal system, a compromise must be reached between all of the above.

It may be that the optimum solution is to use two or more cameras, to ensure that the dot remains in the field of view of at least one of them. In such a multiple camera system, the images from each would be analysed and either the camera giving the best tracking score, or a combination of each could be used to generate the POV data. An alternative (or additional) method to ensure that the user's head remains in the camera field of view is to use a movable camera.

Using this system, it will be possible to view the depicted object over a fairly wide viewing angle (up to +/-70° may be possible for smaller objects). Current CRT screens, and even some LCDs will enable viewing over this angle, but the intensity can start to fall off at higher angles. Given that the angle at which a given pixel is viewed will be different from that of other pixels in the image, some unintended intensity variation across the displayed image might result. To an extent, this could be correctable.

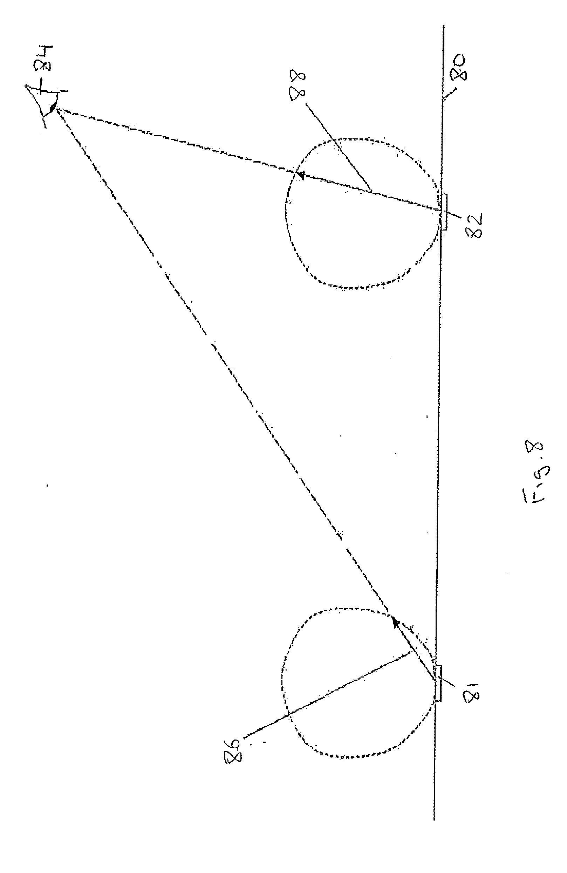

As noted above, a problem with viewing images displayed on a monitor from a variety of positions, regardless of whether or not the images are intended to provide a 3-dimensional illusion, is that the intensity of light output by a particular pixel is dependent on the direction from which that pixel is viewed. The intensity variation described above can be expressed in the form of a polar diagram, where the length from the source, to a point on the curve at a given angle, represents the relative intensity at that angle. This is described below with reference to Figure 8.

Figure 8 is a representation of two pixels of a monitor 80. A first pixel 81 and a second pixel 82 are each shown with a polar diagram showing the intensity of the pixel light output in different directions. As shown in Figure 8, in each case, the pixel intensity is strongest when viewed head-on, and gets weaker when viewed from the side.

In Figure 8, the pixels are viewed from a location 84. From location 84, the angle at which pixel 81 is viewed is considerably shallower than that of pixel 82. Pixel 82 would therefore appear significantly brighter, as represented by the intensity arrows 86 and 88.

However, once the POV is known, the angle to any given pixel can also be calculated, and thus its relative intensity can be calculated. To a certain degree, this variation can be corrected, if the polar diagram for the screen were known, by applying the inverse of the relative intensities, brightening the dimmer pixels and/or dimming the brighter ones.

This form of polar correction can be provided regardless of whether or not the image being displayed is a simulated 3D image.

**Claims**

1. A system comprising:

   a monitor;
   a rendering module adapted to provide image data for display by the monitor; and
   a point-of-view module for determining the position of a viewer relative to the monitor,
   wherein the output of said rendering module is dependent on the determined position of the viewer relative to the monitor.

2. A system as claimed in claim 1, further comprising a polar correction module adapted to adjust the brightness of pixels of the displayed image in dependence on the determined position of the viewer.

3. A point-of-view module for providing data for use in rendering an object for display, the point-of-view module having an input for receiving images relating to a viewer and an output for providing point-of-view data, wherein the point-of-view module determines the position of the viewer in order to provide said point-of-view data.

**4.** A system as claimed in claim 1 or 2 or a point-of-view module as claimed in claim 3 further comprising one or more imaging devices to take images of said viewer, wherein the point-of-view module determines the position of said viewer from the images of the viewer taken by the imaging devices.

**5.** A system or a point-of-view module as claimed in claim 4, wherein at least one of said one or more imaging device is movable.

**6.** A method of displaying an image of an object, the method comprising the steps of:

determining a position of a viewer in a common co-ordinate system;
determining the position of the object in the common co-ordinate system; and
using a rendering module to provide data for displaying the object so that, when displayed, the object appears to the viewer as it would when viewed from the determined position of the viewer.

**7.** A method as claimed in claim 6, wherein the step of determining a position of the viewer comprises using one or more imaging devices to take images of the viewer and determining the position of the viewer relative to the imaging device.

**8.** A method as claimed in claim 7, further comprising the step of moving the imaging device in order to keep the viewer in the field of view of the imaging device.

**9.** A system comprising:

a monitor for displaying an image;
a point-of-view module for determining the position of the viewer relative to the monitor; and
a polar correction module adapted to adjust the brightness of pixels of the image to be displayed in dependence on the position of the viewer.

**10.** A method of displaying an image of an object on a monitor, the method comprising the steps of:

determining a position of a viewer relative to the monitor; and
adjusting the brightness of pixels of said image in dependence on the determined position of the viewer relative to the monitor, thereby providing polar brightness correction.

Fig. 1

EP 2 116 919 A1

Fig. 2

Fig. 3

Fig.4

Fig. 5

Fig. 6

Fig. 7

Fig. 8

Europäisches
Patentamt
European
Patent Office
Office européen
des brevets

**EUROPEAN SEARCH REPORT**

Application Number

EP 08 27 5014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/075735 A1 (MARMAROPOULOS GEORGE [US]) 22 April 2004 (2004-04-22) | 1,6 | INV. G06F3/01 |
| Y | * the whole document * | 2-5,7,8 | G06T15/00 G09G5/10 |
| X | EP 0 845 737 A (CANON KK [JP] CANON KK) 3 June 1998 (1998-06-03) | 1,6 | |
| Y | * claim 1; figures 1,23 * | 2-5,7,8 | |
| X | JP 09 204153 A (CANON KK) 5 August 1997 (1997-08-05) | 9,10 | |
| Y | * abstract * | 2 | |
| Y | DE 198 19 961 A1 (KUKULENZ DIRK [DE]) 11 November 1999 (1999-11-11) * claims 1,9,10,13 * | 3-5,7,8 | |
| D,X | EP 1 279 425 A (KONAMI CORP [JP]) 29 January 2003 (2003-01-29) | 1,3,4,6,7 | |
| Y | * abstract * | 5,8 | |
| X | EP 0 874 303 A (TEXAS INSTRUMENTS FRANCE [FR]; TEXAS INSTRUMENTS INC [US]) 28 October 1998 (1998-10-28) | 1,3,4,6,7 | TECHNICAL FIELDS SEARCHED (IPC) |
| Y | * abstract * | 5,8 | G06F G09G H04N |
| X | WO 2005/010739 A (PHILIPS INTELLECTUAL PROPERTY [DE]; KONINKL PHILIPS ELECTRONICS NV [NL] 3 February 2005 (2005-02-03) | 1,3,4,6,7 | G06T |
| Y | * abstract * * page 6, lines 21-25 * | 5,8 | |

The present search report has been drawn up for all claims

| Place of search | Date of completion of the search | Examiner |
|---|---|---|
| The Hague | 16 December 2008 | Mao, Pauline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

Application Number

EP 08 27 5014

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 08 27 5014

The Search Division considers that the present European patentapplication does not comply with the requirements of unity of invention and relates to severalinventions or groups of inventions, namely:

```
    1. claims: 1,2,9,10

                        Display with polar correction of brightness
                        ---

    2. claims: 1,3,4,5,6,7,8

            Interactive pseudo 3D display and its tracking system
                        ---
```

## ANNEX TO THE EUROPEAN SEARCH REPORT
## ON EUROPEAN PATENT APPLICATION NO.

EP 08 27 5014

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2008

| Patent document cited in search report | | Publication date | Patent family member(s) | | Publication date |
|---|---|---|---|---|---|
| US 2004075735 | A1 | 22-04-2004 | AU 2003264808 A1<br>CN 1705962 A<br>EP 1554698 A1<br>WO 2004036503 A1<br>JP 2006503365 T<br>KR 20050050139 A | | 04-05-2004<br>07-12-2005<br>20-07-2005<br>29-04-2004<br>26-01-2006<br>27-05-2005 |
| EP 0845737 | A | 03-06-1998 | DE 69725953 D1<br>DE 69725953 T2<br>US 6157382 A | | 11-12-2003<br>02-09-2004<br>05-12-2000 |
| JP 9204153 | A | 05-08-1997 | NONE | | |
| DE 19819961 | A1 | 11-11-1999 | NONE | | |
| EP 1279425 | A | 29-01-2003 | JP 3611807 B2<br>JP 2003030686 A<br>US 2003017872 A1 | | 19-01-2005<br>31-01-2003<br>23-01-2003 |
| EP 0874303 | A | 28-10-1998 | DE 69715816 D1<br>DE 69715816 T2 | | 31-10-2002<br>30-04-2003 |
| WO 2005010739 | A | 03-02-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1279425 A